# EUROPEAN PATENT APPLICATION

(11) **EP 1 354 770 A2**
(43) Date of publication of application: **22.10.2003**
(21) Application number: 03003400.3
(22) Date of filing: 14.02.2003
(51) Int. Cl.: B60R 21/20

(54) **Mounting arrangement for an airbag**

(30) Priority: 01.03.2002 GB 0204907
(71) Applicant: Autoliv Development AB, 44783 Vargarda (SE)
(72) Inventor: Grenier, Eric, 8600 Poitiers (FR)
(74) Representative: Frankland, Nigel Howard

(57) **Abstract**

A mounting arrangement for releasably mounting an air-bag unit on a steering wheel includes a mounting plate (11) which defines apertures (21, 22, 23, 24) to receive the feet of an air-bag unit. The plate is provided with a spring (31) having a first portion (32) carrying two forwardly extending arms (33, 34). The arms engage lugs (25, 26, 27, 28) which depend from the plate. The spring extends across the apertures (21, 22, 23, 24) to provide a snap-action fastening. If the spring is moved in a predetermined manner, parts of the arms (33, 34) are guided by the depending lugs so that the arms no longer extend across the relevant apertures (22, 23) thus enabling the gas generator to be released.

## Description

**THE PRESENT INVENTION** relates to a mounting arrangement, and more particularly relates to a mounting arrangement for releasably mounting an air-bag unit on a vehicle steering wheel.

It is conventional for the steering wheel of a vehicle, such as a motor car, to be provided with an air-bag unit containing an air-bag and an associated inflator, the air-bag being adapted to inflate in the event that an accident should occur to provide a protective cushion in front of the driver of the vehicle.

It is desirable to be able to mount the air-bag unit to the steering wheel after the steering wheel has been mounted in position on the steering column in the motor vehicle.

It has been proposed in DE 19725648 A to provide a snap-in arrangement in which feet provided on the air-bag unit have peripheral grooves which engage with a spring mounted on the upper surface of a hub plate of a steering wheel frame. Such an arrangement may suffer from two disadvantages. The first disadvantage is that since regulations require a steering wheel to present a flush surface, even on the surface facing away from the driver, it is difficult to "foam" the steering wheel in the region of the hub plate, since the foam would, or could, interfere with the parts of the hub plate that form the snap-in connection. Whilst the steering wheel frame could be selectively foamed, with a cover being provided to conceal the un-foamed part of the steering wheel, such an arrangement could prove to be expensive and inconvenient. Also the described snap-in arrangement is relatively weak. It is important that the air-bag unit should be retained securely connected to the steering wheel on deployment of the air-bag. During and immediately following deployment, very severe forces may be applied to the part of the air-bag unit that is connected to the steering wheel.

The present invention seeks to provide an improved mounting arrangement for an air-bag unit on a steering wheel.

According to this invention there is provided a mounting arrangement for releasably mounting an air-bag unit on a steering wheel, the mounting arrangement comprising a mounting plate adapted to be mounted in position on a steering wheel frame adjacent and spaced from the hub of the steering wheel frame, the mounting plate defining a plurality of apertures, each aperture being adapted to receive a foot provided on an air-bag unit, the plate being provided with a spring, the spring being mounted to the underside of the plate, which is the side of the plate which is to be closest to the hub, the spring being retained in position by a plurality of retaining and guide elements, the spring having portions which extend across each of said apertures to form a snap action connection, at least one guide element being arranged to guide part of the spring from a condition in which it extends across an aperture, to a condition in which it does not extend across the aperture in response to a predetermined movement of the spring.

Preferably An arrangement according to Claim 1 wherein the spring is substantially "U"-shaped having a central portion which extends across at least one aperture, and two arm portions which extend substantially perpendicularly from the central portion, each arm portion extending across a respective aperture, and wherein the spring includes, between the central portion and each arm portion, at least one inclined portion which is inclined to the axis of the central portion, and the axis of the arm portion, the inclined portion engaging a retaining or guide element such that movement of the central portion in a direction parallel with the arm portions will cause the inclined portions of the spring to slide against the retaining or guiding elements to cause the arm portions to move to a position in which they no longer extend across the apertures.

Preferably the central portion of the spring extends across two apertures.

Conveniently the retaining guiding elements comprise depending ears which depend from that side of the plate which is to be closest to the hub.

Advantageously each ear is a stamped ear having an initial depending portion and a terminal horizontal portion horizontal with the plate.

The invention also relates to a steering wheel frame provided with a mounting of the arrangement as described above. The steering wheel frame and the mounting arrangement combination may be provided with an air-bag unit retained in position by the mounting assembly.

In order that the invention may be more readily understood, and so that further features thereof may be appreciated, the invention will now be described, by way of example, with reference to the accompanying drawings in which:
FIGURE 1 is an exploded view, with parts cut-away, of a steering wheel frame, and a mounting plate forming part of a mounting arrangement in accordance with the invention,
FIGURE 2 is an underneath view of the mounting plate illustrating a retaining spring secured to the mounting plate,
FIGURE 3 is a perspective view illustrating the mounting plate mounted in position on the steering wheel frame, with parts of the steering wheel frame being cut-away, illustrating parts of mounting feed present on an air-bag unit being received within apertures formed in the mounting plate, and
FIGURE 4 is an underneath view of the mounting plate illustrating a tool being used to move the spring from a retaining position to a release position.

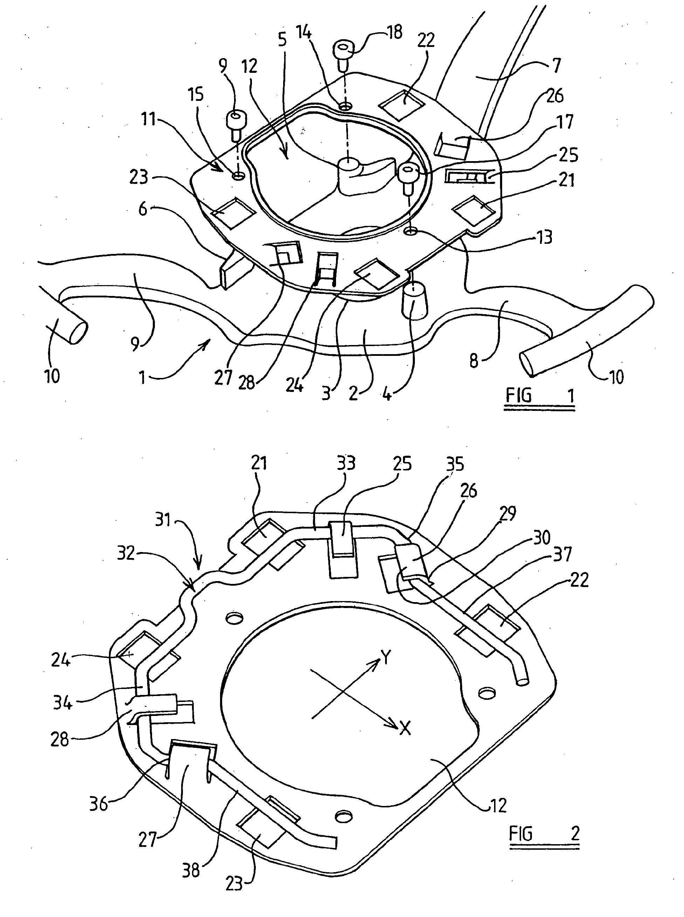

Referring initially to Figure 1 of the accompanying drawings, part of a steering wheel frame 1 is illustrated. The frame 1 incorporates a hub plate 2 provided with a central aperture 3, by means of which the hub plate may be mounted on a steering wheel. The upper surface of the hub plate is provided with a plurality of upwardly directed projections 4, 5, 6, which will be referred to hereinafter. Extending outwardly from the hub plate 2 are a plurality of spokes 7, 8, 9, which extend to the rim 10 of the steering wheel. The hub plate 2 is provided only with the single aperture 3 which receives part of the steering column.

A mounting plate 11 is provided which is to be mounted on the steering wheel frame 1. The mounting plate 11 is provided with a large central aperture 12 which, when the mounting plate is in position, overlies the aperture 3 formed in the hub plate 2, thus providing access to a nut which may secure the steering column to the hub plate 2. About the periphery of the large aperture 12 are three smaller apertures 13, 14, 15, which can be aligned with the projections 4, 5 and 6. Screws 17, 18, 19 are provided which may pass through the apertures 13 to be received within appropriate bores formed within the projections 4, 5, 6 to secure the plate 11 to the steering wheel frame at a position slightly spaced above the hub plate 2, with the plate 11 being generally co-planar with the hub plate 2.

The mounting plate 11 is provided with four spaced-apart apertures 21, 22, 23, 24, which are spaced about the periphery of the central aperture 12. Each of these four apertures is illustrated as being of square configuration, but apertures of any convenient configuration may be utilised. The four apertures 21, 22, 23, 24 will, as will become clear from the following description, receive fixing feet provided on an air-bag unit.

The plate 11 is provided with four spaced-apart "ears" 25, 26, 27 and 28. The ears 25 and 26 are located between the apertures 21 and 22 at one side of the central aperture 12, and the ears 27 and 28 are located between the apertures 23 and 24 on the other side of the central aperture 12.

As can be seen most clearly from Figure 2, for example, the ear 26 consists of a portion 29 which extends substantially vertically downwardly beneath the plate 11 and terminates in a horizontal portion 30 which extends parallel with the underside of the plate 11 at a specific distance therefrom. Each ear may be formed by stamping the plate.

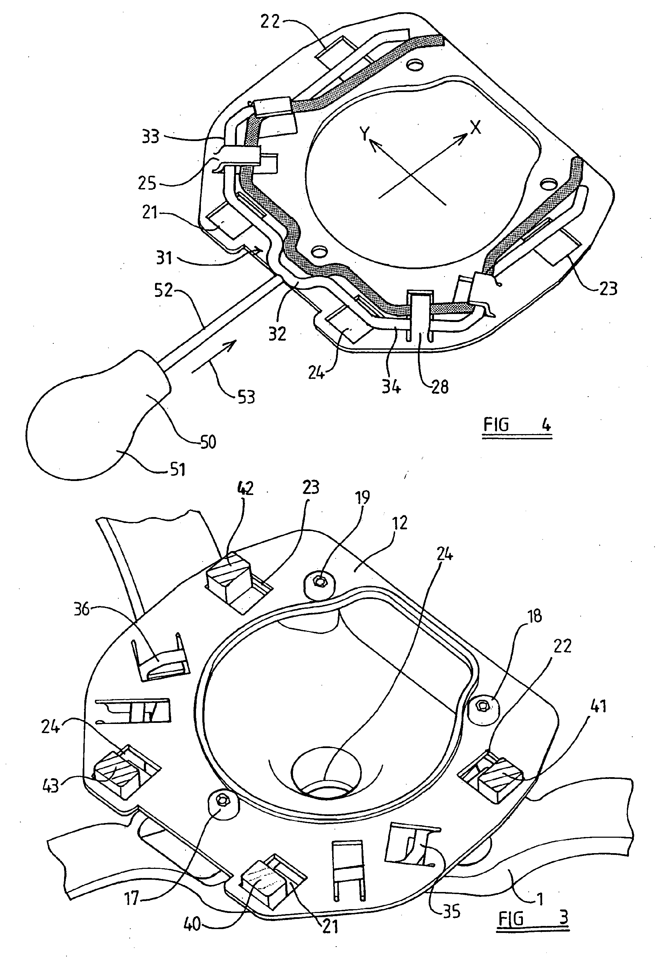

In Figure 2, a notional "axis" indicating an X direction and a Y direction is given for purposes of explanation, and similar axes are shown in Figure 4.

A generally "U"-shaped mounting spring 31 is provided which is mounted on the underside of the plate, the spring being retained by the ears 25, 26, 27, 28, and having portions extending across the apertures 21, 22, 23, 24. The spring is to form part of a snap connection constituted by the plate and the spring. The spring has a first portion 32 which extends generally in the "Y" direction and which has two parts which extend across the apertures 21 and 24. At opposed ends of the section 32 the spring is bent by substantially 45° to form sections 33, 34 which engage with the ears 25 and 28. At the ends of the sections 33 and 34, the spring passes through a 90° bend to sections 35, 36 which are inclined relative to the X axis engage with the ears 26 and 27. The ears 26 and 27 are similarly inclined to the X axis. Here it is to be noted that in an initial condition of the spring, the depending part of each ear is co-aligned with the part of the spring that it engages.

At the end of the spring parts 35 and 36, the spring is again bent to provide terminal parts 37, 38 of the spring, which are now aligned with the X axis and which extend across the apertures 22 and 23.

Figure 3 illustrates the plate 12, together with the spring 31, when mounted in position on the steering wheel frame. The figure also illustrates the lower-most parts of four feet 40, 41, 42, 43 being inserted through the apertures 21, 22, 23 and 24 respectively. Each foot has an enlarged lower end and a groove or recess above the lower end. As the foot is inserted through the aperture, so the part of the spring extending across the aperture, is deflected away from its initial position, but when the groove is inserted through the aperture and becomes aligned with the spring, the spring snaps back into the groove to secure the foot in position. As the spring is beneath the plate, rather than on top of the plate, a secure and strong connection is achieved.

If the air-bag unit is to be released room the steering wheel, a tool 50 is utilised, the tool comprising a handle 51 and an elongate shank 52. The tool is brought into engagement with the central part of the first region 32 of the spring 31 to apply a horizontal movement to that part of the spring in the X direction, as can be seen in Figure 4. In Figure 4 an initial position of the spring is shown with the spring illustrated un-shaded, and a final position of the spring is shown with the spring being shaded.

As a force is applied to the spring by the tool in the X direction, as indicated by arrow 53, so the first portion 32 of the spring 31 will move in the X direction, thus moving the portion 32 of the spring out of alignment with the apertures 21 and 24. This movement will also move the inclined portions 33 and 34 of the spring away from the associated ears 25 and 28.

However, the described movement of the spring will cause the next adjacent inclined portions of the spring 35 and 36 to slide against the depending portions of the ears 26 and 27. Since these portions are aligned with the inclined portions of the spring, the net result is that the terminal portions 37 and 38 of the spring are driven inwardly towards each other in the Y direction, so that these terminal parts 37, 38 of the springs are moved from their initial position in which they extend across the apertures 22 and 23 to a position in which they are withdrawn from the apertures 22, 23. It is to be appreciated that once the spring has moved to the shaded position, as shown in Figure 4, any air-bag unit mounted to the mounting plate may be released.

The mounting arrangement as described above has a first advantage in that the mounting arrangement involves a totally separate mounting plate which is mounted on projections provided on the upper surface of the hub plate 2 of the steering wheel frame, so that there is no need for the hub of the steering wheel frame to be provided with any apertures other than the single aperture necessary for the hub plate to be engaged with the steering column. A further advantage is that the spring is located beneath the plate and thus provides a very strong connection with the air-bag unit.

In the present Specification "comprise" means "includes or consists of and "comprising" means "including or consisting of".

The features disclosed in the foregoing description, or the following Claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A mounting arrangement for releasably mounting an air-bag unit on a steering wheel, the mounting arrangement comprising a mounting plate adapted to be mounted in position on a steering wheel frame adjacent and spaced from the hub of the steering wheel frame, the mounting plate defining a plurality of apertures, each aperture being adapted to receive a foot provided on an air-bag unit, the plate being provided with a spring, the spring being mounted to the underside of the plate, which is the side of the plate which is to be closest to the hub, the spring being retained in position by a plurality of retaining and guide elements, the spring having portions which extend across each of said apertures to form a snap action connection, at least one guide element being arranged to guide part of the spring from a condition in which it extends across an aperture, to a condition in which it does not extend across the aperture in response to a predetermined movement of the spring.

2. An arrangement according to Claim 1 wherein the spring is substantially "U"-shaped having a central portion which extends across at least one aperture, and two arm portions which extend substantially perpendicularly from the central portion, each arm portion extending across a respective aperture, and wherein the spring includes, between the central portion and each arm portion, at least one inclined portion which is inclined to the axis of the central portion, and the axis of the arm portion, the inclined portion engaging a retaining or guide element such that movement of the central portion in a direction parallel with the arm portions will cause the inclined portions of the spring to slide against the retaining or guiding elements to cause the arm portions to move to a position in which they no longer extend across the apertures.

3. An arrangement according to Claim 2 wherein the central portion of the spring extends across two apertures.

4. An arrangement according to Claim 1, Claim 2 or Claim 3 wherein the retaining guiding elements comprise depending ears which depend from that side of the plate which is to be closest to the hub.

5. An arrangement according to Claim 4 wherein each ear is a stamped ear having an initial depending portion and a terminal horizontal portion horizontal with the plate.

6. A steering wheel frame provided with a mounting arrangement according to any one of the preceding Claims.

7. A steering wheel frame and mounting arrangement combination according to Claim 6 provided with an air-bag unit retained in position by the mounting assembly.
